# FASCICULE DE BREVET EUROPEEN

(11) **EP 2 626 219 B1**
(45) Date de publication et mention de la délivrance du brevet: **25.10.2017**
(21) Numéro de dépôt: 11796007.0
(22) Date de dépôt: 27.01.2011
(51) Int. Cl.: B60C 11/00, B60C 15/024, B60C 19/00, B60C 3/02

(54) **PNEUMATIQUES POUR BICYCLETTES À QUATRE BANDES DE ROULEMENT**
FAHRRADREIFEN MIT VIER LAUFFLÄCHEN
BICYCLE TIRES WITH FOUR TREADS

(30) Priorité: 16.06.2010 MX MX10000253
(43) Date de publication de la demande: 14.08.2013
(73) Titulaire: Cordova Boone, Luis, C.P. 45238 Zapopan, Jalisco (MX)
(72) Inventeur: Cordova Boone, Luis, C.P. 45238 Zapopan, Jalisco (MX)
(74) Mandataire: Audic, Hervé
(86) Numéro de dépôt international: PCT/MX2011/000009
(87) Numéro de publication internationale: WO 2011/159142

(56) Documents cités:
- EP-A1- 1 625 949
- WO-A1-2006/009419
- BE-A- 510 016
- DE-A1- 4 209 687
- FR-A- 1 406 806
- US-A- 1 381 534
- US-A1- 2007 056 671

## Description

### Arrière-plan

La bicyclette est un véhicule à deux roues à propulsion humaine. Elle est écologique et est idéale pour les déplacements dans les zones urbaines et rurales ; elle est également utilisée dans différentes modalités sportives.

La bicyclette a aujourd'hui acquis une très grande importance, en tant que moyen de transport avec de multiples avantages (pollution nulle et économie) mais aussi au niveau social et sportif, son utilisation étant synonyme de vie saine.

Les moyens de fabrication en série, les matériaux employés de plus en plus légers et résistants et l'introduction massive de leur utilisation, surtout dans les pays socialement les plus avancés, ont fait des bicyclettes des machines de plus en plus légères et sûres, et leur usage s'étend fortement de jour en jour.

### Les types de bicyclettes :

Domestique ou de promenade, de montagne, de course, de tourisme, de plage, de livraison, pour enfants, tout terrain, de route, de piste, de courses contre la montre, tricycles de cargaison et de location

Les tricycles de cargaison ou de transport sont utilisés pour se déplacer rapidement en ville, ils permettent d'éviter les problèmes environnementaux de bruit et de pollution.

Ils sont utilisés pour le transport de tout type de marchandises, pour le service postal, pour les balayeurs et pour le transport de personnel.

La bicyclette de location doit être considérée comme un service complémentaire du transport collectif et comme une solution pour réduire la pollution de l'environnement dans les villes. Au Mexique, ce service est très limité, mais dans des pays comme la France, l'Espagne, l'Allemagne, les Pays-Bas, etc., son usage s'est étendu à des milliers et des milliers d'utilisateurs.

### Les parties de la bicyclette :

- cadre ; squelette ou support de tous les autres éléments
- direction ; élément propre à la conduite de la bicyclette
- selle ; élément sur lequel s'assied le cycliste
- pédales ; elles actionnent les roues au moyen d'une chaîne
- transmission ; formée par l'axe et le plateau qui fournissent la puissance à la roue arrière au moyen de la chaîne
- freins ; notamment les poignées de frein et systèmes de freinage
- manette de changement de vitesse ; elle présente les combinaisons de vitesses
- roues ; ce sont les éléments qui ont le plus évolué dans la bicyclette, elles sont formées principalement par un cercle métallique où est monté le pneu, un moyeu central qui a pour fonction de maintenir la roue sur le cadre, la valve pour gonfler le pneu et les rayons qui forment ensemble la jante des roues

### Les pneus :

Ce sont les éléments les plus importants d'une bicyclette, même si le cycliste est amené à les remplacer périodiquement, étant donné que la bande de roulement, qui est la partie plane qui entre en contact avec la surface du chemin, perd son adhérence du fait de l'usure qu'elle subit en raison du frottement. Cela se produit après plusieurs années d'utilisation ou des milliers de kilomètres parcourus, même si le corps ou la carcasse est en état d'utilisation.

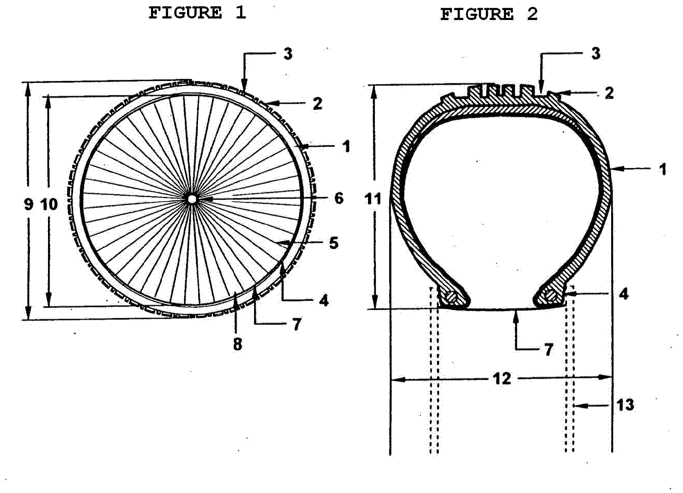

Ceci vient du fait que dans la conception du pneu classique, on utilise une seule bande de roulement, comme le montre la figure 1, qui représente un pneu classique avec ses composants principaux, constitué d'un corps ou d'une carcasse (1), d'une bande de roulement (2), de rainures ou canaux de drainage (3), d'un boudin ou rebord du talon qui contient un câble d'acier (4), des rayons (5), du moyeu central (6), du cercle métallique (7), de la valve (8), du diamètre extérieur (9) et du diamètre intérieur du pneu (10).

La figure 2 montre une coupe transversale du même pneu classique, sur laquelle en plus des parties déjà mentionnées, sont représentées la hauteur du pneu (11), la largeur de celui-ci (12) et la partie de la jante métallique (13).

Un pneu torique et fermé est par ailleurs décrit dans la demande de brevet US-A-2007056671. L'usure que subit la bande de roulement en raison du frottement sur les différents chemins a donné naissance à la présente invention, qui est structurellement différente du pneu classique et consiste à ajouter trois bandes de roulement supplémentaires au corps ou à la carcasse une fois modifié(e).

### Description de l'invention

L'invention concerne un pneu tel que défini dans la revendication 1.

Les détails caractéristiques de ce pneu innovant sont clairement présentés dans la description suivante, et sur les figures jointes, les mêmes parties étant désignées par les mêmes numéros de référence sur l'ensemble des figures présentées.
La figure 1 montre une vue de face d'un pneu pour bicyclette classique monté sur la jante métallique.
La figure 2 montre une vue de côté en coupe transversale détaillée d'un pneu classique pour bicyclette monté sur la jante métallique.
La figure 3 montre une vue de face du pneu pour bicyclette avec quatre bandes de roulement, monté sur la jante métallique.
La figure 4 montre une vue de côté en coupe transversale détaillée du pneu pour bicyclette avec quatre bandes de roulement, monté sur la jante métallique.

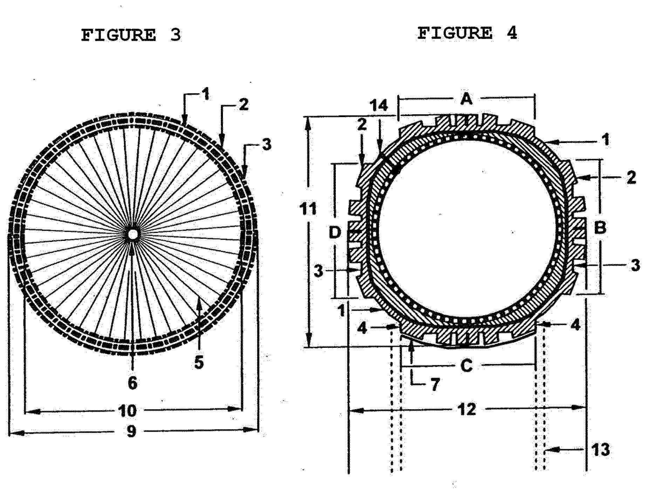

Sur ces figures, la figure 3 montre une vue de face du nouveau pneu monté sur sa jante métallique et avec certaines de ses parties principales, le corps ou la carcasse (1), la bande de roulement (2), les rainures ou canaux de drainage (3), les rayons (5), le moyeu central (6), le diamètre extérieur (9) et le diamètre intérieur (10).

Le changement proposé dans la construction du nouveau pneu consiste à ajouter au corps ou à la carcasse quatre bandes de roulement (A, B, C et D) équidistantes sur son périmètre extérieur.

La figure 4 montre une coupe transversale de ce nouveau pneu, constitué d'un cercle ou anneau formant la partie principale du corps ou de la carcasse (1), sur le périmètre extérieur duquel sont intégrées quatre bandes de roulement (A, B, C et D) équidistantes ; ces bandes (2) sont égales sur le dessin, mais elles pourront être différentes si l'on souhaite en avoir une pour circuler sur terrain humide ou par temps de pluie, une autre sur le sable ou la terre, une autre sur les pavés ou l'asphalte, une autre sur la glace ou la neige ou une avec un quelconque dessin que l'on souhaite avoir ; elles présenteront en outre des rainures ou canaux de drainage (3) pour déloger l'eau de pluie sur les côtés du pneu, un boudin ou rebord du talon (4), qui permettra au pneu de venir en appui contre le cercle métallique (7) de la jante (13), la hauteur du pneu (11) et sa base (12) seront égales dans ce modèle d'utilité ; la valve (14), qui permettra de gonfler le pneu ; cette valve pourra être similaire à celle utilisée dans les ballons de football, les ballons de plage, etc. avec la particularité qu'elle sera positionnée dans une configuration donnée qui n'empêche pas la rotation libre du pneu et ne complique pas le montage du pneu sur la jante, à titre d'exemple non limitatif, la position de la valve se trouve à 45° sur le corps du pneu traversant un des angles formé entre les bandes de roulement.

Les bandes de roulement (A, B, C et D) du nouveau pneu feront partie intégrante de celui-ci dès sa fabrication et devront donc être identiques quant à leurs caractéristiques physiques, leurs matériaux de construction et leurs propriétés chimiques, les faces de ces bandes pouvant avoir les mêmes dessins ou des dessins différents.

On insiste sur le fait que la présente invention constitue une amélioration par rapport à la conception d'un pneu classique en ce qu'elle incorpore quatre bandes de roulement à la place d'une seule, comme dans les pneus classiques.

De ce fait, lorsque la bande de roulement qui est en contact avec la surface des routes ou chemins s'use en raison du frottement et que l'on souhaite avoir une nouvelle bande de roulement, on dégonfle et on démonte le pneu de sa jante métallique, on le fait tourner dans le sens horaire ou anti-horaire et en fonction du dessin ou de la bande de roulement que l'on souhaite avoir en contact avec le sol, on le remonte et, pour finir, on le gonfle à nouveau. De cette façon, on obtient une nouvelle bande de roulement, ce qui permet de prolonger la durée de vie ou d'utilisation du pneu.

Ce nouveau pneu pourra être utilisé pratiquement sur tous les types et modèles existants de bicyclettes, sauf ceux qui sont utilisés dans les compétitions officielles et sportives, dans les courses contre la montre, sur le tour de France, sur le tour d'Italie, dans les compétitions olympiques et mondiales, etc.

La présente invention présente des caractéristiques qui lui permettent d'être appliquée à des bicyclettes, mais également à certains types de motocyclettes, nécessitant à cette fin que les diamètres des pneus soient les plus grands possibles, et que la hauteur, qui est la différence entre le diamètre extérieur et intérieur, soit la plus petite possible, ce qui permet d'installer sur ces pneus les quatre bandes de roulement.

Dans les zones où l'aspect économique est d'une importance vitale, cette invention offre de grands avantages du fait de l'utilisation du pneu avec ses quatre bandes de roulement, comme sur les tricycles pour le transport de cargaison, pour le service postal, pour le transport de personnel et touristique, etc. Ce n'est pas le cas avec le pneu classique qui demandera un remplacement plus fréquent.

Le changement de position des bandes de roulement (A, B, C et D) sur le nouveau pneu peut être réalisé en l'espace de quelques minutes, conduisant à la mise en oeuvre de la présente invention, en dégonflant et en démontant tout d'abord le pneu, en le faisant tourner dans le sens horaire ou anti-horaire, en sélectionnant la bande de roulement requise, en remontant le pneu et en le regonflant pour le remettre en service.

De ce fait, on pourra compter sur un nouveau pneu qui présente presque trois fois la durée de vie d'un pneu classique, permettant de parcourir davantage de kilomètres, à un moindre coût par kilomètre parcouru.

## Revendications

1. Pneu pour bicyclette ou motocyclette, ledit pneu comprenant un corps ou une carcasse (1) dont la section transversale est sensiblement de forme circulaire, **caractérisé en ce qu'**il comprend quatre bandes de roulement (A, B, C, D) disposées sur la paroi extérieure de la carcasse (1) et alternant les unes avec les autres autour de la section transversale,
la carcasse (1) étant destinée à être tournée sur elle-même pour que chaque bande de roulement (A, B, C, D) se trouve successivement à la périphérie du pneu pour être en contact avec la surface des routes ou chemins et à l'intérieur du pneu,
chaque bande de roulement (A, B, C, D) comptant un boudin ou rebord (4) destiné à s'appuyer sur la jante métallique (13), de chaque côté, lorsque cette bande de roulement (A, B, C, D) se trouve à l'intérieur du pneu,
lesdites bandes de roulement présentant également une pluralité de rainures ou canaux de drainage (3) de telle manière que les bandes de roulement (A, B, C, D), conjointement avec la carcasse (1), forment un corps unitaire, ledit corps présentant également une valve (14) pour gonfler le pneu,
la valve (14) traversant un des angles formés entre les bandes de roulement pour ne pas empêcher la rotation libre du pneu ni compliquer le montage du pneu sur la jante.

2. Pneu selon la revendication 1, **caractérisé en ce qu'**il est suffisamment élastique pour pouvoir faire tourner tout l'ensemble, interchangeant la position des bandes de roulement.

3. Pneu selon la revendication 1 ou 2, **caractérisé en ce que** la valve est positionnée à 45° sur le corps du pneu.

4. Pneu selon l'une quelconque des revendications 1 à 3, **caractérisé en ce que** les bandes de roulement (A, B, C, D) sont équidistantes les unes des autres autour de la section transversale.

5. Pneu selon l'une quelconque des revendications 1 à 4, **caractérisé en ce que** les bandes de roulement (A, B, C, D) présentent des faces ayant toutes les mêmes dessins.

6. Pneu selon l'une quelconque des revendications 1 à 4, **caractérisé en ce que** les bandes de roulement (A, B, C, D) présentent des faces ayant des dessins différents.

## Patentansprüche

1. Reifen für ein Fahrrad oder ein Motorrad, wobei der besagte Reifen einen Korpus oder eine Karkasse (1) umfasst, dessen (deren) Querschnitt eine in etwa kreisrunde Form aufweist, **dadurch gekennzeichnet, dass** er vier Laufflächen (A, B, C, D) umfasst, die an der Außenwand der Karkasse (1) angeordnet sind, und die einander um den Querschnitt abwechseln,
wobei die Karkasse (1) dazu bestimmt ist, in sich verdreht zu werden, damit sich jede Lauffläche (A, B, C, D) jeweils nacheinander an der Peripherie des Reifens befindet, um mit der Oberfläche der Straßen und Wege und im Inneren des Reifens in Kontakt zu sein,
wobei jede Lauffläche (A, B, C, D) einen Wulst oder Rand (4) aufweist, der dazu bestimmt ist, sich beiderseits an der Metallfelge (13) anzulegen, wenn sich diese Lauffläche (A, B, C, D) im Inneren des Reifens befindet,
wobei die besagten Laufflächen ebenfalls eine Vielzahl von Rillen oder Drainagekanälen (3) aufweisen, sodass die Laufflächen (A, B, C, D) gemeinsam mit der Karkasse (1) einen einheitlichen Korpus bilden, wobei der besagte Korpus ebenfalls ein Ventil (14) aufweist, um den Reifen aufzupumpen,
wobei das Ventil (14) durch einen der Winkel führt, die zwischen den Laufflächen gebildet werden, um das freie Drehen des Reifens nicht zu behindern, und um die Montage des Reifens auf der Felge nicht zu erschweren.

2. Reifen nach Anspruch 1, **dadurch gekennzeichnet, dass** er elastisch genug ist, um die gesamte Einheit so drehen lassen zu können, dass die Position der Laufflächen getauscht wird.

3. Reifen nach Anspruch 1 oder 2, **dadurch gekennzeichnet, dass** das Ventil auf 45° am Reifenkorpus positioniert ist.

4. Reifen nach irgendeinem der Ansprüche 1 bis 3, **dadurch gekennzeichnet, dass** die Laufflächen (A, B, C, D) im selben Abstand zueinander um den Querschnitt herum angeordnet sind.

5. Reifen nach irgendeinem der Ansprüche 1 bis 4, **dadurch gekennzeichnet, dass** die Laufflächen (A, B, C, D) Seiten aufweisen, die allesamt dieselben Profile haben.

6. Reifen nach irgendeinem der Ansprüche 1 bis 4, **dadurch gekennzeichnet, dass** die Laufflächen (A, B, C, D) Seiten aufweisen, die unterschiedliche Profile haben.

## Claims

1. Tyre for a bicycle or motorcycle, said tyre comprising a body and a casing (1), the cross section of which is substantially circular in shape, **characterised in that** it comprises four treads (A, B, C, D) disposed on the external wall of the casing (1) and alternating with one another around the cross section,
the casing (1) being intended to be turned on itself so that each tread (A, B, C, D) is situated successively at the periphery of the tyre so as to be in contact with the surface of the roads or paths and inside the tyre,
each tread (A, B, C, D) having a flange or beaded edge (4) intended to bear on the metal rim (13), on each side, when this tread (A, B, C, D) is situated inside the tyre,
said treads also having a plurality of drainage grooves or channels (3) so that the treads (A, B, C, D), conjointly with the casing (1), form a unit body, said body also having a valve (14) for inflating the tyre,
the valve (14) passing through one of the angles formed between the treads in order not to prevent the free rotation of the tyre or complicate the mounting of the tyre on the rim.

2. Tyre according to claim 1, **characterised in that** it is sufficiently elastic to be able to turn the entire assembly, interchanging the positions of the treads.

3. Tyre according to claim 1 or 2, **characterised in that** the valve is positioned at 45° on the body of the tyre.

4. Tyre according to any one of claims 1 to 3, **characterised in that** the treads (A, B, C, D) are equidistant from one another around the cross section.

5. Tyre according to any one of claims 1 to 4, **characterised in that** the treads (A, B, C, D) have faces all having the same designs.

6. Tyre according to any one of claims 1 to 4, **characterised in that** the treads (A, B, C, D) have faces having different designs.
